# EUROPEAN PATENT APPLICATION

(11) **EP 4 842 135 A1**
(43) Date of publication of application: **18.11.2026**
(21) Application number: 25758034.0
(22) Date of filing: 04.02.2025
(51) Int. Cl.: H04W 76/18, H04W 16/18, H04W 28/24, H04W 88/18

(54) **WIRELESS COMMUNICATION SYSTEM**

(30) Priority: 21.02.2024 JP 2024024715
(71) Applicant: National Institute of Information and Communications Technology, Koganei-shi, Tokyo 184-8795 (JP)
(72) Inventor: WAKAYAMA Atsushi, Koganei-shi, Tokyo 184-8795 (JP); MATSUMURA Takeshi, Koganei-shi, Tokyo 184-8795 (JP); MURAKAMI Homare, Koganei-shi, Tokyo 184-8795 (JP); IBUKA Kazuo, Koganei-shi, Tokyo 184-8795 (JP)
(74) Representative: Müller-Boré & Partner Patentanwälte PartG mbB
(86) International application number: PCT/JP2025/003529
(87) International publication number: WO 2025/177822

(57) **Abstract**

[Problem]

Provided is a wireless communication system that allocates a resource necessary for a terminal, and maximizes performance of the entire system.

[Solution]

A wireless communication system includes a management server that manages a wireless communication network formed between a wireless base station and terminals. The management server includes: service level setting means that sets each layer in which a coverage range of the wireless communication network is divided into at least two or more areas, and sets a service level that is allowed to be provided to the terminal for each of the layers; layer determination means that determines, based on acquired position information of the terminal, the layer to which the terminal belongs; level determination means that determines, based on the service level set for the layer to which the terminal belongs as determined by the layer determination means, whether an acquired required service level requested by the terminal is satisfied; and service control means that provides the required service level to the terminal when the level determination means has determined that the required service level is satisfied, and controls so as not to provide the required service level to the terminal when the level determination means has determined that the required service level is not satisfied.

## Description

### TECHNICAL FIELD

The present invention relates to a wireless communication system, and particularly to a wireless communication system suitable for maximizing performance of the entire system by determining a required service level of an application of a terminal.

### BACKGROUND ART

Terminals that are within an area of wireless communication, such as cellular communication and Wi-Fi (registered trademark), can use those communications, and radio resources that the terminals can use are determined according to the positions of the terminals and the radio reception conditions. On the other hand, the communication quality (communication speed, latency, and the like) required by an application installed on a terminal differs between applications. In the current situation, a radio resource used by a terminal and a service level required by an application might not be operated in association with each other. Therefore, when a radio resource equal to or greater than the service level required by the application is allocated, waste of system resources occurs. Further, when a radio resource that cannot provide the service level required by the application is allocated, the application does not operate normally, and a disadvantage arises for a user.

Among 3GPP (registered trademark) standards, the following are standards that allow communication parameters to be changed for each application. 3GPP TS 23. 107: QoS Concept and Architecture. 3GPP TS 23. 207: End-to-end Quality of Service (QoS) concept and architecture.

In these 3GPP (registered trademark) standards, a QoS policy representing communication quality is allowed to be set on a per-application basis, and different QoS is allowed to be realized for each application. A method for configuring QoS policies is defined in 3GPP TS 23. 107, and examples of a QoS policy that allows communication parameters to be changed for each application include the following. (1) Voice call: Since latency is important, bandwidth is limited, and latency is kept to a minimum. (2) Video call: Since latency and bandwidth are important, bandwidth is moderately secured, and latency is kept within an allowable range. (3) Data communication: Since bandwidth is important, bandwidth is preferentially secured.

### CITED DOCUMENTS

### NON-PATENT LITERATURE

Non-Patent Document 1: 3GPP (registered trademark): http://www.3GPP.org/

### DISCLOSURE OF THE INVENTION

### PROBLEMS TO BE SOLVED BY THE INVENTION

In the above-described 3GPP (registered trademark) standards, only a communication protocol for realizing end-to-end QoS is defined, and optimization, as a system, of the service level required by the application and the radio resource allocated to the terminal is not defined.

Accordingly, the present invention has been devised in view of the background described above, and provides a wireless communication system that determines a position and a radio condition of a terminal, and a service level requested by an application of the terminal, allocates a resource necessary for the terminal, and maximizes performance of the entire system.

### SOLUTIONS TO THE PROBLEMS

A wireless communication system according to a first invention is a wireless communication system including: a wireless base station; a plurality of terminals that execute wireless communication with the wireless base station; and a management server that manages a wireless communication network formed between the wireless base station and the terminals. The management server includes: service level setting means that sets each layer in which a coverage range of the wireless communication network is divided into at least two or more areas, and sets a service level that is allowed to be provided to the terminal for each of the layers; layer determination means that determines, based on acquired position information of the terminal, the layer to which the terminal belongs; level determination means that determines, based on the service level set for the layer to which the terminal belongs as determined by the layer determination means, whether an acquired required service level requested by the terminal is satisfied; and service control means that provides the required service level to the terminal when the level determination means has determined that the required service level is satisfied, and controls so as not to provide the required service level to the terminal when the level determination means has determined that the required service level is not satisfied.

The wireless communication system according to a second invention, which is in the first invention, the wireless base station incorporates the management server.

The wireless communication system according to a third invention, which is in the first invention or the second invention, the level determination means executes a determination as to whether the required service level is satisfied based on radio quality data of the wireless communication network.

The wireless communication system according to a fourth invention, which is in the first invention or the second invention, the service level setting means enlarges or reduces the layer based on a determination result by the level determination means.

### EFFECTS OF THE INVENTION

According to the present inventions 1 to 4 including the configurations described above, it is possible to realize the wireless communication system that determines a position and a radio condition of the terminal, and a service level requested by an application of the terminal, allocates a resource necessary for the terminal, and maximizes performance of the entire system.

By managing, at the management server, data of the plurality of terminals regarding the terminal positions, the network conditions at the positions, and the service levels requested by the terminals, it is possible to provide an optimal service in the entire system.

### BRIEF DESCRIPTION OF THE DRAWINGS

Fig. 1 is a configuration diagram of a wireless communication system to which the present invention is applied.
Fig. 2 is an explanatory diagram of area map management in Fig. 1.
Fig. 3 is an explanatory diagram of a multi-layer setting of the area map management in Fig. 2.
Fig. 4 is a diagram illustrating an applicable layer table of a wireless communication system according to an embodiment of the present invention.
Fig. 5 is a diagram illustrating an application example of layers of the wireless communication system according to the embodiment of the present invention.
Fig. 6 is a diagram illustrating an application table of the layers of the wireless communication system according to the embodiment of the present invention.
Fig. 7 is a configuration diagram of the wireless communication system according to the embodiment of the present invention.
Fig. 8 is a functional block diagram of a management server in the wireless communication system according to the embodiment of the present invention.
Fig. 9 is a processing flowchart of the management server in the wireless communication system according to the embodiment of the present invention.
Fig. 10 is a configuration diagram illustrating a modification of the wireless communication system according to the embodiment of the present invention.
Fig. 11 is a diagram illustrating an application example of the layers of the wireless communication system according to the embodiment of the present invention.

### DESCRIPTION OF PREFERRED EMBODIMENTS

Hereinafter, an embodiment exemplifying an application of the present invention will be described with reference to the drawings.

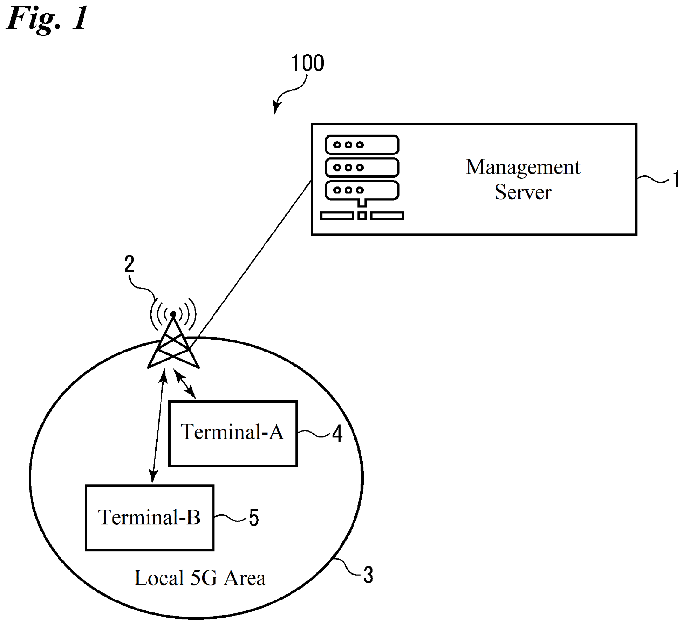

First, with reference to Fig. 1, Fig. 2, Fig. 3, and Fig. 4, a wireless communication system according to the embodiment of the present invention will be described.

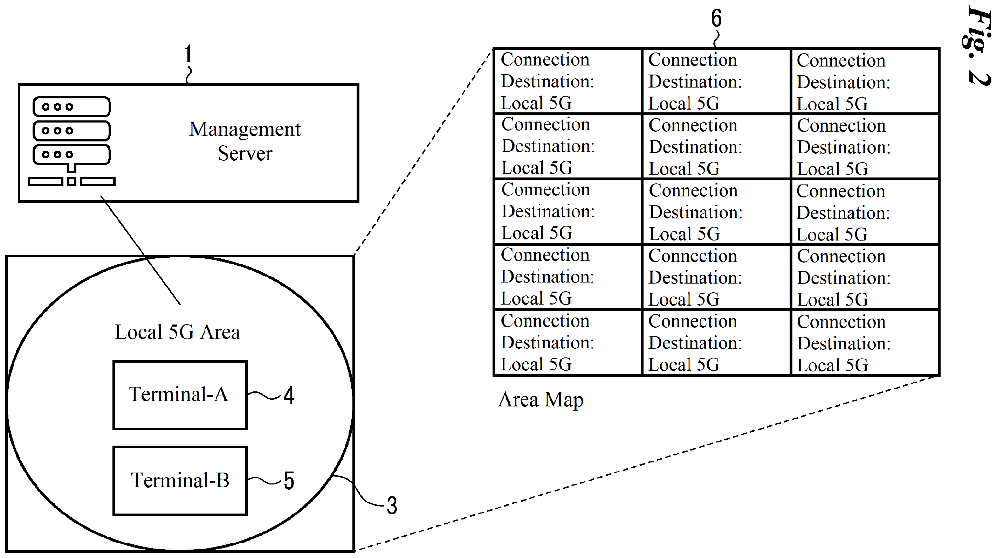

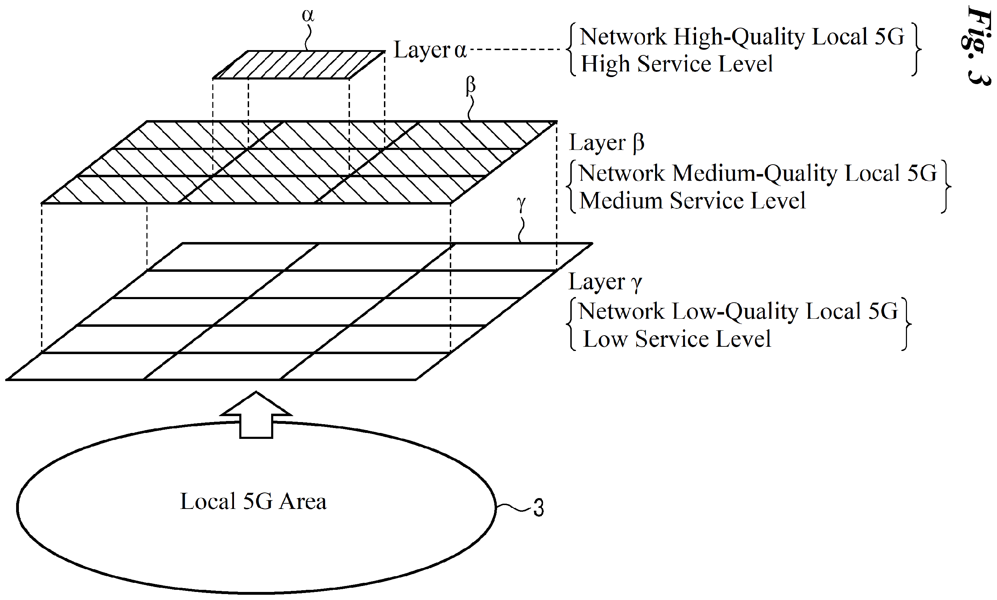

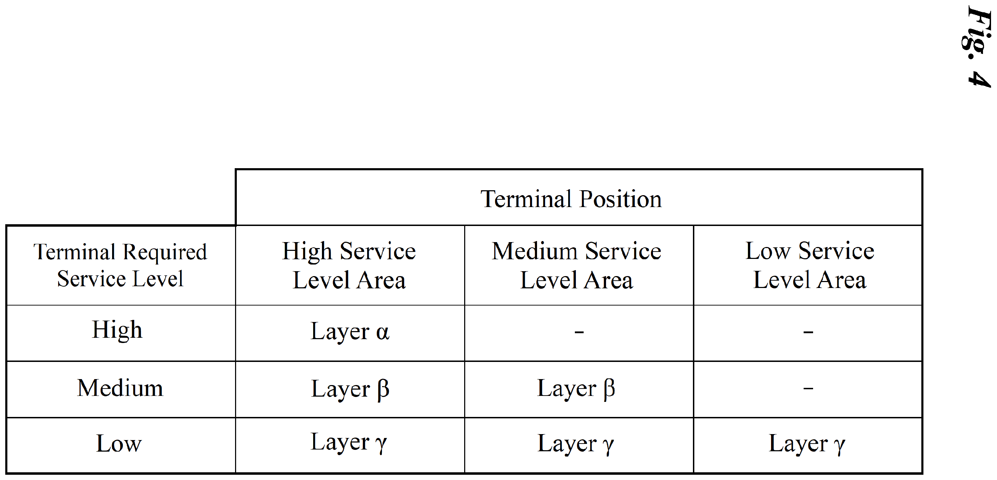

Fig. 1 is a configuration diagram of a wireless communication system to which the present invention is applied. Fig. 2 is an explanatory diagram of characteristic area map management of the present invention in Fig. 1. Fig. 3 is an explanatory diagram of a multi-layer setting. Fig. 4 is a diagram illustrating an applicable layer table of the wireless communication system according to the embodiment of the present invention. In the following description, as an example of a wireless communication network, a case of using a local 5G network is described.

The term "local 5G" refers to a private 5G network that enterprises and local governments build for use within a limited area. The 5G network has three features: high speed and large capacity, ultra-low latency, and simultaneous multi-device connection. Since the local 5G network is a private network, it is possible to flexibly construct an area. A frequency to be used is selected from Sub 6 (4.6 to 4.9 GHz band) and a millimeter wave (28.2 to 29.1 GHz band) allocated for the local 5G. The present inventors have invented a wireless communication system that effectively utilizes these used frequency bands, determines a position and a radio condition of a terminal, and a service level requested by an application of the terminal, allocates a resource necessary for the terminal, and maximizes performance of the entire system.

As illustrated in Fig. 1 and Fig. 2, a wireless communication system 100 includes a management server 1, a wireless base station 2, a local 5G area 3 of the local 5G network as a wireless communication network, a terminal 4, a terminal 5, and an area map 6. Fig. 1 illustrates a minimum configuration of the wireless communication system 100, and, although in actuality many terminals and the like are connected within the local 5G area 3, they are omitted for the sake of explanation. For example, the wireless communication system 100 executes wireless communication in a wireless communication environment in which required service levels are different, such as IoT that connects all things and people by wireless, wireless communication that simultaneously connects a large number of devices such as cameras and sensors, and remote wireless communication that executes remote control of a device (for example, a robot) with low latency.

The management server 1 executes area management of the plurality of terminals 4, 5, ... that are connected to the wireless base station 2 and are present within the local 5G area 3.

The wireless base station 2 executes, for example, connection management of the plurality of terminals 4 and 5 in the local 5G area 3. The installation of the wireless base station 2 may be executed at the center of the local 5G area 3, or, by devising a radiation angle of a base station antenna, may also be executed at locations that do not cause an obstacle, such as on a rooftop of a building and at an indoor location.

The local 5G area 3 partitions, for each section, an area covered by the local 5G area 3 that is managed on the management server 1 as illustrated in Fig. 2, and executes management in that unit. This is referred to as area map management. In each area of the area map of Fig. 2, the service level that is allowed to be provided varies depending on a congestion state of the network, a required service level, a network condition, and the like. Here, the service level refers to a level of communication quality required by an application on the terminals 4 and 5. The local 5G area 3 holds the area map as a layer structure overlaid according to a network condition and a service level to be provided, and dynamically applies these layers to each of the terminals 4 and 5. This is defined as multi-layering of the area map, and is illustrated in Fig. 3. In the example of Fig. 3, a layer α is a high-quality local 5G network, and indicates a layer of high service level. A layer β is a medium-quality local 5G network, and indicates a layer of medium service level. A layer γ is a low-quality local 5G network, and indicates a layer of low service level. According to the required service levels from the terminals 4 and 5, the congestion state of the network, and the network condition, the service level that is allowed to be provided is determined by the positions of the terminals 4 and 5 on the area map, and the layer to be applied is determined in Fig. 4.

Specifically, when the terminals 4 and 5 are at positions in a high service level area and the required service levels of the terminals 4 and 5 are high, the layer α is applied. When the terminals 4 and 5 are at positions in a medium service level area and the required service levels of the terminals 4 and 5 are high, since the required service level is not satisfied, the required service level is not provided. That is, the layer is not applied. Similarly, when the terminals 4 and 5 are at positions in a low service level area and the required service levels of the terminals 4 and 5 are high, since the required service level is not satisfied, the layer is not applied. When the terminals 4 and 5 are at positions in the high service level area and the required service levels of the terminals 4 and 5 are medium, the layer β is applied so as not to allocate unnecessary resources. When the terminals 4 and 5 are at positions in the medium service level area and the required service levels of the terminals 4 and 5 are medium, since the required service level is satisfied, the layer β is applied. When the terminals 4 and 5 are at positions in the low service level area and the required service levels of the terminals 4 and 5 are medium, since the required service level is not satisfied, the layer is not applied. When the required service levels of the terminals 4 and 5 are low, since the required service level is satisfied regardless of whether the terminals 4 and 5 are at positions in the high service level area, the medium service level area, or the low service level area, the layer γ is applied.

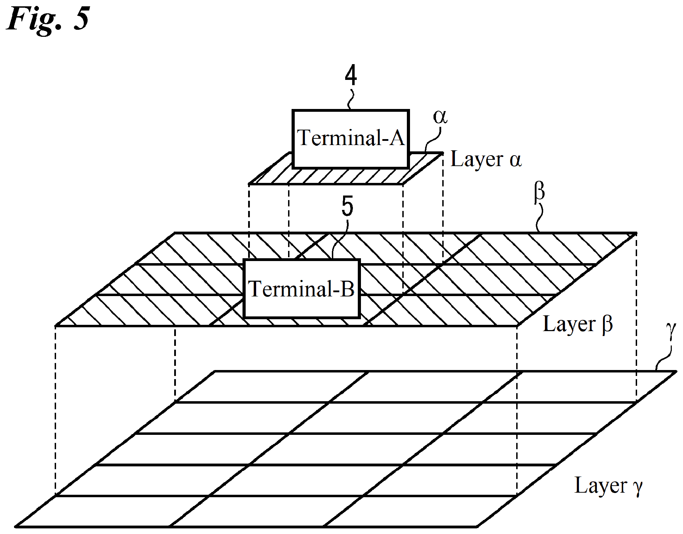

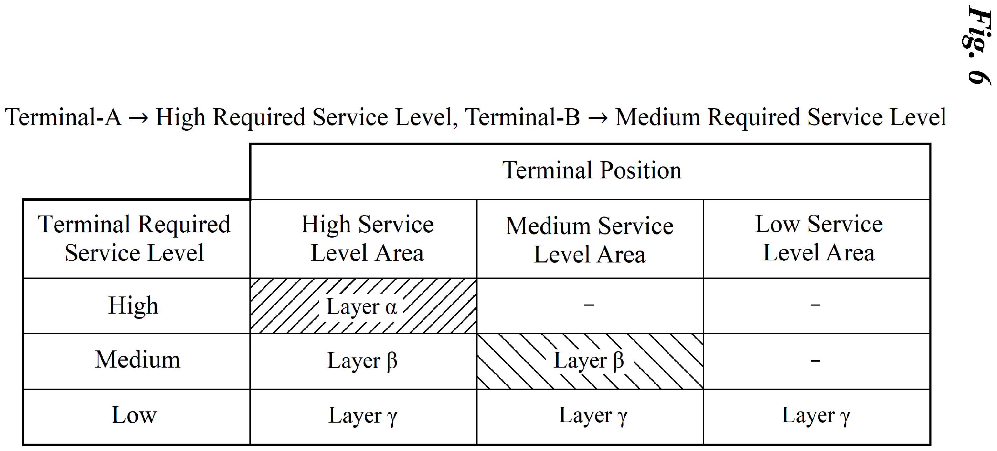

For example, as illustrated in Fig. 5, when the terminal 4 is in an area position to which the layer α belongs and the terminal 5 is in an area position to which the layer β belongs, the terminal 4 requests a high service level, and the terminal 5 requests a medium service level. Since the positions of the respective terminals 4 and 5 allow a required service level to be provided, as illustrated in Fig. 6, it is possible to apply the layer α to the terminal 4 and the layer β to the terminal 5. In Fig. 6, the terminal 4 indicates a high required service level, and the terminal 5 indicates a medium required service level.

The terminals 4 and 5 include wireless communication terminals owned by a person, automated guided vehicles having a wireless communication function, and robots having a wireless communication function. The terminals 4 and 5 are not limited to mobile terminals. A fixed object is also included. Here, the automated guided vehicle and the robot include movement in a simulation communication environment not only in a physical space but also in a virtual space and in a space in which the physical space and the virtual space are fused. A communication partner also includes a case in which a cybernetic avatar executes remote communication control.

The area map 6 has areas acquired by dividing a coverage range of the wireless communication network into predetermined sections, and has a multi-layer structure by superimposing area maps.

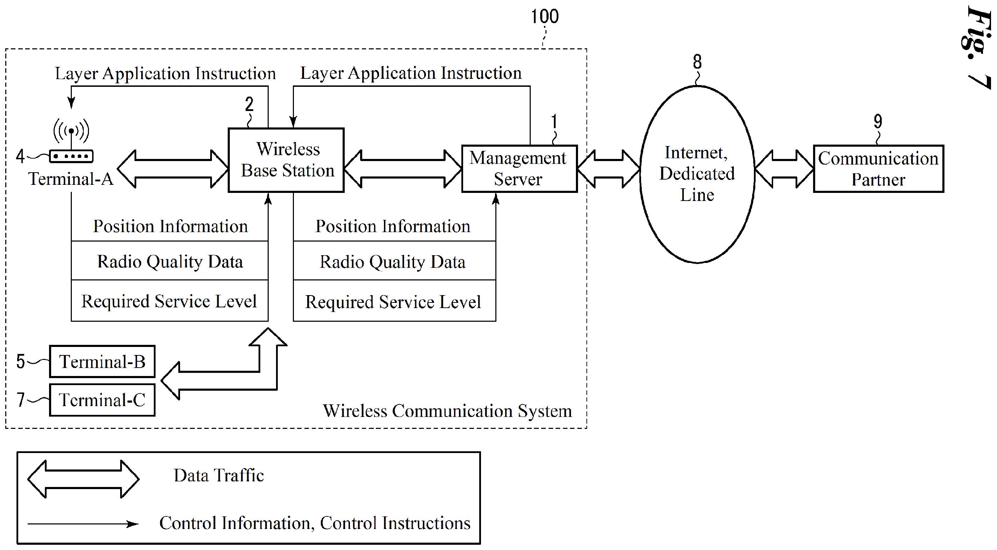

Fig. 7 is a configuration diagram of the wireless communication system according to the embodiment of the present invention.

As illustrated in Fig. 7, the wireless communication system 100 includes the management server 1, the wireless base station 2, the terminal 4, the terminal 5, and a terminal 7. The management server 1 is connected to a communication partner 9 via a communication network 8 such as Internet or a dedicated line. Here, thick arrows indicate data traffic, and thin arrows indicate control information and control instructions. Hereinafter, the operation of the wireless communication system 100 will be described.

First, the wireless base station 2 receives position information, radio quality data, and the required service level of the application of the terminal, from the terminal 4. Next, the wireless base station 2 transmits the received position information of the terminal, the radio quality data, and the required service level, to the management server 1. The management server 1, based on at least the position information of the terminal and the required service level, gives an instruction of the layer to be applied to the wireless base station 2. The wireless base station 2 transmits the layer application instruction from the management server 1 to the terminal 4, and provides a service level that meets the request. Here, it is acceptable to change an applicable layer in consideration of the current communication network conditions as the radio quality data, for example, communication speed, throughput, and received signal strength.

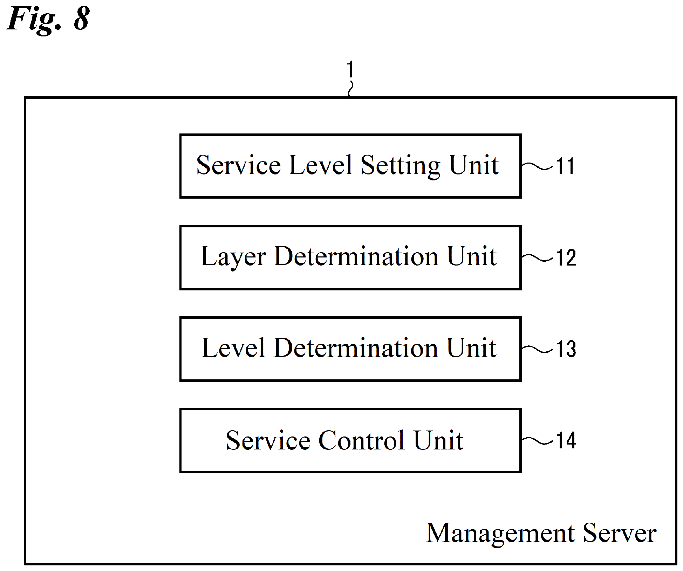

As illustrated in Fig. 8, the management server 1 includes a service level setting unit 11, a layer determination unit 12, a level determination unit 13, and a service control unit 14.

The service level setting unit 11 sets each layer in which the coverage range of the wireless communication network is divided into at least two or more areas, for example, the layers α, β, and γ in Fig. 3, and sets a service level that is allowed to be provided to the terminals 4 and 5 for each of the layers α, β, and γ. The layer α indicates a network of high-quality local 5G and the high service level. The layer β indicates a network of medium-quality local 5G and the medium service level. The layer γ indicates a network of low-quality local 5G and the low service level. For example, the service level setting unit 11 may execute a service level setting of the layers α, β, and γ in accordance with a required service level such as high speed and large capacity wireless communication of the local 5G network, ultra-low latency wireless communication, and simultaneous multi-device connection wireless communication. In Fig. 3, the service level is divided into three stages, but the service level is not limited thereto, and any number of stages may be used. Further, the service level setting unit 11 may be configured to enlarge or reduce a layer based on a determination result by the level determination unit 13. For example, when the terminals 4, 5, ... that are present in a local 5G area have an increased number of requests with a low required service level for simultaneous multi-device connection, it is acceptable to execute optimization of the wireless communication network by reducing the layer α and the layer β and enlarging the layer γ.

The layer determination unit 12 determines, based on the acquired position information of the terminals 4 and 5, the layer to which the terminals 4 and 5 belong. Additionally, the layer determination unit 12 may execute a determination as to whether the required service level is satisfied based on the radio quality data of the wireless communication network.

The level determination unit 13 determines, based on the service level set for the layer to which the terminals 4 and 5 belong as determined by the layer determination unit 12, whether the acquired required service levels requested by the terminals 4 and 5 are satisfied.

When the level determination unit 13 has determined that the required service levels are satisfied, the service control unit 14 provides the required service levels to the terminals 4 and 5, and when the level determination unit 13 has determined that the required service levels are not satisfied, the service control unit 14 controls so as not to provide the required service levels to the terminals 4 and 5.

The management server 1 is illustrated with a characteristic configuration of the present invention, and also executes control of other overall network management; however, since it has the same configuration as the known configuration, the description is omitted.

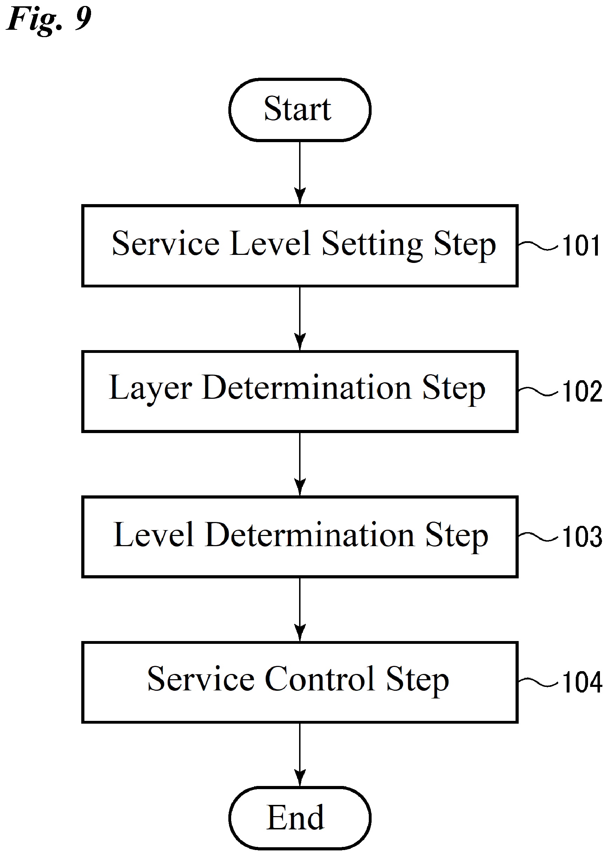

As illustrated in Fig. 9, a management method by the management server 1 includes a service level setting step 101, a layer determination step 102, a level determination step 103, and a service control step 104. The above-described service level setting step 101, layer determination step 102, level determination step 103, and service control step 104 are software implementation of the hardware of Fig. 8. Hereinafter, each processing step will be described in accordance with the processing flow of Fig. 9.

The service level setting step 101 sets each layer in which a coverage range of the local 5G area 3 of the local 5G network is divided into at least two or more areas, for example, the layers α, β, and γ, and sets a service level that is allowed to be provided to the terminals 4 and 5 for each of the set layers α, β, and γ. Setting of the provided service level to the high service level, the medium service level, the low service level, and the like is executed as described above.

The layer determination step 102 determines, based on the position information of the terminals 4 and 5 acquired from the terminals 4 and 5 that have made connection requests, the layers to which the terminals 4 and 5 belong.

The level determination step 103 determines, based on the service levels set for the layers, for example, the layers α, β, and γ, to which the terminals 4 and 5 belong as determined by the layer determination step 102, whether the acquired required service levels requested by the terminals 4 and 5 are satisfied.

When the level determination step 103 has determined that the required service levels are satisfied, the service control step 104 provides the required service levels to the terminals 4 and 5, and when the level determination step 103 has determined that the required service levels are not satisfied, the service control step 104 controls so as not to provide the required service levels to the terminals 4 and 5.

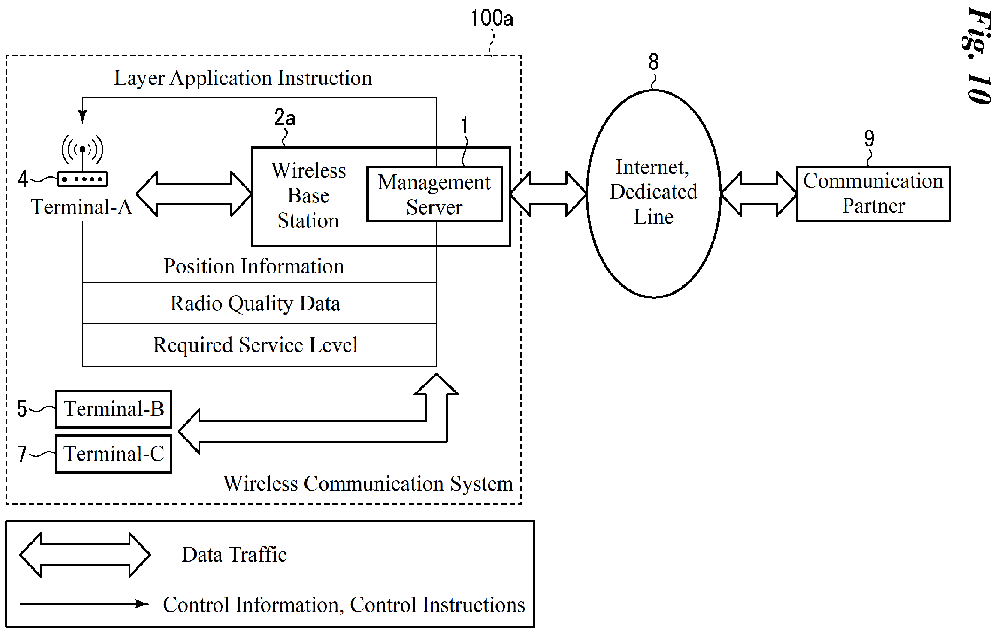

Fig. 10 illustrates a configuration of a wireless communication system 100a in which the management server 1 of Fig. 8 is built into a wireless base station 2a. The management server 1 built into the wireless base station 2a executes the same operation as described above. That is, the management server 1 receives position information, radio quality data, and a required service level of an application of the terminal 4, from the terminal 4. The management server 1 determines the layer to be applied based on at least the position information and the required service level of the terminal 4, transmits the determined layer application instruction to the terminal 4, and provides the service level that meets the requirement. As for other configurations, since they are the same as those in Fig. 7, the description is omitted.

### <Use Example in Which Effect of Invention is Most Effectively Exhibited>

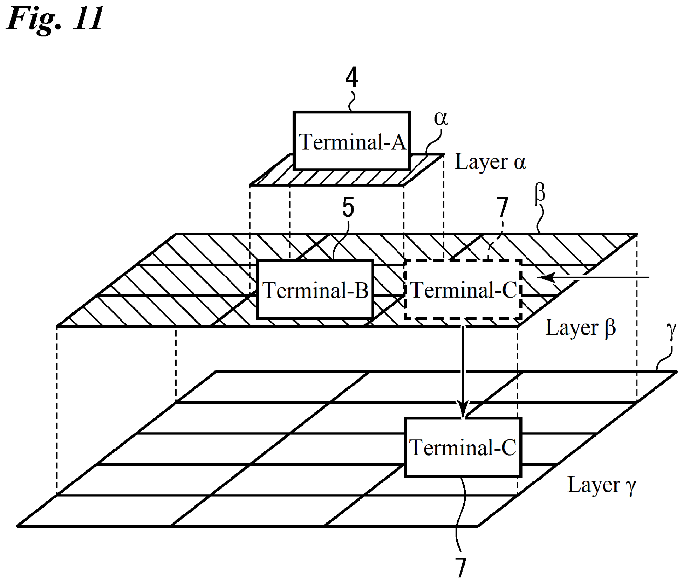

A user assumed to utilize the present invention is a business operator that is executing a robot remote control service. For remote control, low-latency communication and high-quality video are required. In the present invention, even when a large number of terminals are present within the same network, it is possible to provide an optimal service. For example, as illustrated in Fig. 11, even when the terminal 7 that requests a service level of the layer β moves into the area, when the management server 1 determines that the network is congested, the system executes optimization by setting the applicable layer to the layer γ.

In the above-described embodiment, the description has been given of the area management of the local 5G network as a wireless communication network, but the present invention is not limited thereto. Similarly, the present invention can also be applied to wireless communication networks, such as cellular and Wi-Fi (registered trademark). The present invention may also be applied by extending to a wireless communication network that combines the local 5G network, a public 5G network, and other networks. In the above-described embodiment, the wireless base station 2 has been described as a local 5G base station, but the present invention is not limited thereto. For example, the present invention can likewise be applied to wireless access points, such as Wi-Fi (registered trademark) access points.

### DESCRIPTION OF REFERENCE SIGNS

1: Management server
2, 2a: Wireless base station
3: Local 5G area
4, 5, 7: Terminal
6: Area map
8: Communication network
9: Communication partner
11: Service level setting unit
12: Layer determination unit
13: Level determination unit
14: Service control unit
100, 100a: Wireless communication system
101: Service level setting step
102: Layer determination step
103: Level determination step
104: Service control step
α, β, γ: Layer

## Claims

1. A wireless communication system comprising:
a wireless base station;
a plurality of terminals that execute wireless communication with the wireless base station; and
a management server that manages a wireless communication network formed between the wireless base station and the terminals, wherein
the management server includes:
service level setting means that sets each layer in which a coverage range of the wireless communication network is divided into at least two or more areas, and sets a service level that is allowed to be provided to the terminal for each of the layers;
layer determination means that determines, based on acquired position information of the terminal, the layer to which the terminal belongs;
level determination means that determines, based on the service level set for the layer to which the terminal belongs as determined by the layer determination means, whether an acquired required service level requested by the terminal is satisfied; and
service control means that provides the required service level to the terminal when the level determination means has determined that the required service level is satisfied, and controls so as not to provide the required service level to the terminal when the level determination means has determined that the required service level is not satisfied.

2. The wireless communication system according to claim 1, wherein
the wireless base station incorporates the management server.

3. The wireless communication system according to claim 1 or 2, wherein
the level determination means executes a determination as to whether the required service level is satisfied based on radio quality data of the wireless communication network.

4. The wireless communication system according to claim 1 or 2, wherein
the service level setting means enlarges or reduces the layer based on a determination result by the level determination means.
